# EUROPÄISCHE PATENTSCHRIFT

(11) **EP 4 581 418 B1**
(45) Veröffentlichungstag und Bekanntmachung des Hinweises auf die Patenterteilung: **02.12.2026**
(21) Anmeldenummer: 23758247.3
(22) Anmeldetag: 10.08.2023
(51) Int. Cl.: G02B 7/02, G02B 13/04, G02B 13/16, G02B 13/00, G02B 1/02, G02B 13/18, G02B 13/14

(54) **WEITWINKELOBJEKTIVVORRICHTUNG**
WIDE-ANGLE OBJECTIVE LENS APPARATUS
APPAREIL DE LENTILLE D'OBJECTIF GRAND ANGLE

(30) Priorität: 30.08.2022 DE 102022121934
(43) Veröffentlichungstag der Anmeldung: 09.07.2025
(73) Patentinhaber: HENSOLDT Optronics GmbH, 73447 Oberkochen (DE)
(72) Erfinder: RAJU, Gokul, Heidenheim 89520 (DE)
(74) Vertreter: Lorenz & Kollegen
(86) Internationale Anmeldenummer: PCT/EP2023/072230
(87) Internationale Veröffentlichungsnummer: WO 2024/046737

(56) Entgegenhaltungen:
- CN-A- 114 114 648
- CN-B- 109 343 201
- ANONYMOUS: "6061 aluminium alloy", 24 August 2022 (2022-08-24), pages 1 - 4, XP093101553, Retrieved from the Internet <URL:https://en.wikipedia.org/w/index.php?title=6061_aluminium_alloy&oldid=1106373488> [retrieved on 20231115]
- -WIKIPEDIA ABBILDUNGSTIEFE: "Abbildungstiefe", 26 August 2022 (2022-08-26), pages 1 - 3, XP093100934, Retrieved from the Internet <URL:https://de.wikipedia.org/w/index.php?title=Abbildungstiefe&oldid=225656791> [retrieved on 20231113]
- ANONYMOUS: "Fenster und Linsen aus Germanium", 14 November 2023 (2023-11-14), pages 1 - 3, XP093101090, Retrieved from the Internet <URL:https://www.alkor.net/de/germanium_windows_and_lenses.html> [retrieved on 20231114]
- KUO CHIH-WEI ED - DRIGGERS RONALD G: "Achromatic triplet and athermalized lens assembly for both midwave and longwave infrared spectra", OPTICAL ENGINEERING, SOC. OF PHOTO-OPTICAL INSTRUMENTATION ENGINEERS, BELLINGHAM, vol. 53, no. 2, 1 February 2014 (2014-02-01), pages 21102, XP060048329, ISSN: 0091-3286, [retrieved on 20130829], DOI: 10.1117/1.OE.53.2.021102

## Beschreibung

Die vorliegende Anmeldung nimmt die Priorität der deutschen Patentanmeldung Nr. 10 2022 121 934.8 in Anspruch. Die Erfindung betrifft eine Weitwinkelobjektivvorrichtung für einen infraroten Spektralbereich.

Weitwinkelobjektive sind aus dem Stand der Technik zur Erfassung eines großen Bildfelds bzw. einer Abbildung von Objekten mit einem großen Bildwinkel bekannt.

Ferner ist es aus dem Stand der Technik bekannt, optische Anordnungen, wie beispielsweise Objektive, derart zu gestalten, dass Strahlung mit einer Wellenlänge aus dem Infrarotbereich mit diesen unter nur geringen oder keinen Verlusten erfasst, weitergeleitet und/oder abgebildet werden kann.

Weiterhin ist es aus dem Stand der Technik bekannt, komplexe optische Systeme hinsichtlich ihrer Bestandteile derart auszubilden, dass durch eine thermische Ausdehnung bzw. Schrumpfung unter Temperaturschwankungen die optischen Eigenschaften des optischen Systems wenigstens annähernd unverändert bleiben. Hierzu ist es aus dem Stand der Technik bekannt, die Materialeigenschaften der beteiligten Bestandteile des optischen Systems derart aufeinander anzupassen, dass sich die jeweiligen Einflüsse der Temperaturschwankungen gegeneinander aufheben.

Nachteilig an aus dem Stand der Technik bekannten Weitwinkelobjektiven ist, dass diese aufgrund der komplexen Auswahl der heranzuziehenden Materialien häufig ein hohes Gewicht aufweisen oder aber, bei der Verwendung leichterer Materialien, lediglich eine geringere Zuverlässigkeit unter Temperaturschwankungen zeigen.

Der vorliegenden Erfindung liegt die Aufgabe zugrunde, eine Weitwinkelobjektivvorrichtung der eingangs erwähnten Art zu schaffen, welche die Nachteile des Standes der Technik vermeidet, insbesondere zuverlässig und leicht ist.

Erfindungsgemäß wird diese Aufgabe durch eine Weitwinkelobjektivvorrichtung mit den in Anspruch 1 genannten Merkmalen gelöst.

Die erfindungsgemäße Weitwinkelobjektivvorrichtung für einen infraroten Spektralbereich,
- weist entlang einer optischen Achse koaxial in Richtung von einer Objektseite zu einer Bildseite nacheinander angeordnet eine Mehrzahl an Linsen sowie eine Infrarotdetektoreinrichtung auf, und
- ist in dem infraroten Spektralbereich, insbesondere von 3,5 µm bis 5 µm, achromatisch und/oder korrigiert für eine chromatische Aberration, und
- ist in einem Temperaturbereich von - 40 °C bis 80 °C passiv athermalisiert ausgebildet, wobei
- die Linsen und die Infrarotdetektoreinrichtung in einer insbesondere optomechanischen Halteeinrichtung und/oder in einer Rahmeneinrichtung gehalten sind, welche Aluminium aufweist und/oder aus Aluminium ausgebildet ist.

Die erfindungsgemäße Weitwinkelobjektivvorrichtung stellt eine auf Brechung beruhende Form eines Weitwinkelobjektivs für ein Mittelwelleninfrarotband (MWIR-Band) dar.

Insbesondere ist die erfindungsgemäße Weitwinkelobjektivvorrichtung über das gesamte MWIR-Band, d. h. zwischen 3,5 µm und 5 µm, achromatisch, wobei auf eine Verwendung von diffraktiven optischen Elementen (DOE) in vorteilhafter Weise verzichtet werden kann.

Herkömmliche Weitwinkelobjektive sind nicht in dem gesamten MWIR-Band farbkorrigiert. Eine Korrektur ist gemäß dem Stand der Technik lediglich für engere Teile des Spektralbereichs vorgesehen.

Aus dem Stand der Technik bekannte optomechanische Aufbauten verwenden zur Umsetzung einer mechanischen Athermalisierung ein schweres Material namens INVAR als Material für Halterungen. CN109343201B offenbart ein ungekühltes langwelliges Infrarot-Optiksystem im Bereich von acht bis zwölf Mikrometern, das durch optisch passive Athermalisierung ohne Fokussierung in einem Temperaturbereich von minus fünfundfünfzig bis plus siebzig Grad Celsius stabil abbildet. Das System besteht aus sechs Linsen in vier Gruppen, die aus Germanium, Chalkogenidglas und Zinksulfid gefertigt sind, und nutzt asphärische Oberflächen zur Reduzierung von Aberrationen. Es zeichnet sich durch ein großes Sichtfeld von über dreiundachtzig Grad mit einer Verzeichnung von unter fünf Prozent aus und ist für hochauflösende Infrarotdetektoren optimiert.

Es kann vorgesehen sein, dass die Haltevorrichtung einen Tubus bzw. eine Hülse aufweist, in welcher die Linsen angeordnet und gehalten sind. Insbesondere kann die Halteeinrichtung in Form eines im Durchmesser variierenden Aluminiumrohrs ausgebildet sein.

Die Verwendung von Aluminium hat den Vorteil, dass es einfach zu bearbeiten, kostengünstig und leicht ist. Ein besonders einfacher Weg, ein optisches System aufzubauen, besteht darin, Linsen innerhalb eines Aluminiumrohrs anzuordnen bzw. zu befestigen. Die Nachteile der Verwendung von Aluminium liegen in seiner starken Ausdehnungs- und Schrumpfneigung aufgrund von Temperaturunterschieden.

Die erfindungsgemäße Weitwinkelobjektivvorrichtung ermöglicht die vorteilhafte Verwendung von Aluminium als Haltematerial durch eine geeignete Auslegung und Konstruktion des von der aus Aluminium ausgebildeten Halteeinrichtung gehaltenen optischen Systems. Verschiedene Aluminiumlegierungen können gleichwertig verwendet werden. Diese haben einen Wärmeausdehnungskoeffizienten im Bereich von 21,5 x 10⁻⁶ 1/K bis 25 x 10⁻⁶ 1/K.

Es kann vorgesehen sein, dass die Weitwinkelobjektivvorrichtung einen fixen Brennpunkt aufweist. Dies hat den Vorteil, dass keine beweglichen Teile innerhalb des optischen Systems der Weitwinkelobjektivvorrichtung vorhanden sind.

Die erfindungsgemäße Weitwinkelobjektivvorrichtung erreicht somit zeitgleich eine Achromatisierung und eine Athermalisierung.

Es kann vorgesehen sein, dass die Infrarotdetektionseinrichtung mittels einer Kühleinrichtung, vorzugsweise einer Peltierkühleinrichtung, gekühlt ist.

Dadurch, dass die Kaltabschirmeinrichtung entlang der optischen Achse bildseitig von den Linsen angeordnet ist, erfahren alle Linsen dieselben Temperaturänderungen, was ein einfacheres Design der Weitwinkelobjektivvorrichtung ermöglicht.

Die erfindungsgemäße Weitwinkelobjektivvorrichtung weist einen sehr geringen Petzval-Wert auf.

Es kann vorgesehen sein, dass die Linsen, die Kaltabschirmeinrichtung sowie die Infrarotdetektoreinrichtung rotationssymmetrisch, vorzugsweise kreisrund, ausgebildet sind.

Die erfindungsgemäße Weitwinkelobjektivvorrichtung hat gegenüber aus dem Stand der Technik bekannten Weitwinkelinfrarotsystemen den Vorteil, dass zugleich eine überlegene optische Leistungsfähigkeit, kompakte Bauanforderungen, sowie eine optische passive Athermalisierung und Achromatisierung gleichzeitig erreicht werden können.

Dadurch, dass die passive Athermalisierung über einen Temperaturbereich von -40 bis +80 °C erfolgt, ist ein thermischer Defokus sehr gut kontrollierbar. Die Achromatisierung innerhalb des gesamten MWIR-Bands sorgt ferner für eine Begrenzung der chromatischen Aberration innerhalb des MWIR-Bands sowie einer Reduktion einer transversalen chromatischen Aberration als Funktion einer Bildhöhe.

Die Verwendung von Aluminium 6061 kann vorteilhaft sein, da dieses eine besonders geringe Dichte und damit ein besonders geringes Gewicht aufweist. Ferner hat Aluminium 6061 einen thermischen Ausdehnungskoeffizienten von 23,6 x 10⁻⁶ 1/K, was einem höchsten thermischen Ausdehnungskoeffizienten unter den üblicherweise verwendeten optomechanischen Halterungsmaterialien entspricht.

In einer vorteilhaften Weiterbildung der erfindungsgemäßen Weitwinkelobjektivvorrichtung kann vorgesehen sein, dass eine objektseitig erste Linse aus einem Material ausgebildet ist, welches mechanisch widerstandsfähig gegen Umwelteinflüsse ist, und/oder dass das Aluminium einen Ausdehnungskoeffizienten von α = 23.6 µm/(m °C) aufweist, und/oder dass das Aluminium Teil einer Legierung 6061 ist, und/oder dass die Linsen wenigstens drei asphärische Flächen aufweisen, und/oder dass eine F-Zahl der Weitwinkelobjektivvorrichtung von 1,8 bis 2,2 beträgt.

Im Rahmen der Erfindung ist unter den Begriffen "objektseitig erste", "objektseitig zweite" usw. eine Position in einer von der Objektseite ausgehenden bzw. gezählten Reihenfolge zu verstehen. Beispielsweise ist die objektseitig zweite Linse die von der Objektseite her gezählt zweite Linse der Weitwinkelobjektivvorrichtung.

Wird die optische passive Athermalisierung aus Aluminium, insbesondere Aluminium 6061, als optomechanisches Material, insbesondere für Halterungen, ausgebildet, so ergibt dies einen Vorteil, insbesondere gegenüber der Verwendung von INVAR. Insbesondere ergibt sich dieser Vorteil aus einer bis zu dreifachen Gewichtssenkung und einer bis zu drei- bis fünffach verbesserten Bearbeitbarkeit und verringerten Kosten.

Hierbei beinhaltet der Kostenpunkt für INVAR den Rohmaterialpreis, Anforderungen an spezielle thermische Behandlungen, spezielle Beschichtungen und/oder Beläge, einfache oder mehrfache Forschungs- und Entwicklungsaufwendungen, um das INVAR in das Weitwinkelobjektiv einzufügen, wobei auch andere Materialien mit abweichenden thermischen Ausdehnungskoeffizienten verwendet werden.

Die vorbeschriebene erfindungsgemäße Weitwinkelobjektivvorrichtung weist eine exzellente optische Leistungsfähigkeit auf. Ein polychromatischer Lichtfleckdurchmesser weist in einem Winkelraum im quadratischen Mittel eine Streuung von weniger als 0,5 mrad auf der optischen Achse und weniger als 2 mrad neben der optischen Achse auf.

Hinsichtlich einer Beugungsenergie auf einer Quadratfläche (diffraction ensquared energy) beträgt diese 85 % abweichend von einer optischen Achse, wobei eine Beugungsgrenze bei 90 % angesetzt werden kann. Die vorbeschriebenen Werte ergeben sich aus einer Auswertung bei einer vollen Breite von 30 µm.

Es ist bei der erfindungsgemäßen Weitwinkelobjektivvorrichtung vorgesehen, dass acht oder neun oder mehr Linsen vorgesehen sind.

Die Verwendung von acht oder neun oder mehr Linsen hat den Vorteil, dass hierdurch die Weitwinkelobjektivvorrichtung besonders zuverlässig ausgebildet werden kann, wobei zugleich ein Gewicht der Weitwinkelobjektivvorrichtung nicht zu hoch wird bzw. moderat bleibt.

Es können acht Linsen vorgesehen sein. Es können neun Linsen vorgesehen sein. Es können mehr als neun Linsen vorgesehen sein.

In einer vorteilhaften Weiterbildung der erfindungsgemäßen Weitwinkelobjektivvorrichtung kann vorgesehen sein, dass eine objektseitig vierte Linse aus einem Material ausgebildet ist, welches eine chromatische Abbe-Zahl von 5 bis 60 aufweist, und/oder dass eine objektseitig fünfte Linse aus einem Material ausgebildet ist, welches eine chromatische Abbe-Zahl von 125 bis 150 aufweist, und/oder dass eine objektseitig siebte Linse aus einem Material ausgebildet ist, welches eine chromatische Abbe-Zahl von 250 bis 325 aufweist.

Die vorbeschriebenen Ausführungen der vierten, fünften und siebten Linse ermöglichen eine besonders vorteilhafte Erzielung der gewünschten passiven Athermalisierung.

Durch die vorgenannten Materialien kann eine optische passive Athermalisierung über einen weiten Thermalbereich von mehr als 120 K durch die vorbeschriebene Auswahl von geeigneten optischen Materialien und eine geeignete Verteilung von optischen Leistungsdichten auf besonders einfache Weise erzielt werden.

In einer vorteilhaften Weiterbildung der erfindungsgemäßen Weitwinkelobjektivvorrichtung kann diese durch ein diagonales Sichtfeld von 140° bis 180°, und/oder durch eine longitudinale chromatische Aberration, welche kleiner ist als eine beugungsbegrenzte Abbildungstiefe, und/oder durch einen thermischen Streukreis des quadratischen Mittels, welcher für alle Temperaturschwankungen um weniger als 60 °C um einen Zielwert kleiner ist als ein Durchmesser eines beugungsbegrenzten Lichtflecks, und/oder durch eine laterale chromatische Aberration von höchstens 0,11 % einer Bildhöhe, und/oder eine thermisch bedingte relative Schwankung der Brennweite von höchstens 0,65 % für alle Temperaturschwankungen um weniger als 60 °C um einen Zielwert, und/oder durch eine relative F-Theta-Verzerrung von weniger als ±1 % über ein gesamtes diagonales Sichtfeld, und/oder durch ein Verhältnis zwischen einer bildseitigen Schnittweite zu einer Brennweite und/oder zu einer objektseitigen Schnittweite von wenigstens 4,4 charakterisiert sein.

Es kann vorgesehen sein, dass ein F-Theta-Verzerrungsfehler weniger als 0,5 % über ein gesamtes Bildfeld von 153° beträgt.

Durch die vorbeschriebenen Maßnahmen kann die Weitwinkelobjektivvorrichtung die Vorgaben einer kompakten Bauform erfüllen, wobei ein Verhältnis zwischen einer gesamten Schienenlänge (TTL) der Weitwinkelobjektivvorrichtung zu der effektiven Brennweite (EFL) ungefähr 13 beträgt.

In einer vorteilhaften Weiterentwicklung der erfindungsgemäßen Weitwinkelobjektivvorrichtung kann vorgesehen sein, dass in Richtung von der Objektseite zu der Bildseite die objektseitig erste Linse mit einer negativen Brechkraft, welche teilweise oder ganz aus Saphir, Spinell, und/oder Aluminiumoxynitrid ausgebildet ist, eine objektseitig zweite Linse mit einer negativen Brechkraft, welche teilweise oder ganz aus Silizium ausgebildet ist, eine objektseitig dritte Linse mit einer negativen Brechkraft, welche teilweise oder ganz aus Germanium ausgebildet ist, die objektseitig vierte Linse mit einer positiven Brechkraft, welche teilweise oder ganz aus Saphir, Spinell, Aluminiumoxynitrid, Calciumfluorid, Lithiumfluorid, Bariumfluorid, Magnesiumfluorid und/oder Magnesiumoxid ausgebildet ist, die objektseitig fünfte Linse mit einer positiven Brechkraft, welche teilweise oder ganz aus Zinksulfid und/oder MILTRAN-Keramik ausgebildet ist, eine objektseitig sechste Linse mit einer negativen Brechkraft, welche teilweise oder ganz aus Germanium ausgebildet ist, die objektseitig siebte Linse mit einer positiven Brechkraft, welche teilweise oder ganz aus Chalkogenidmaterial, insbesondere aus GASIR1, GASIR2, GASIR3, GASIR5, IG2, IG3, IG4, IG5, IG6 oder deren kommerziellen Äquivalenten ausgebildet ist, eine objektseitig achte Linse mit einer positiven Brechkraft, welche teilweise oder ganz aus Silizium ausgebildet ist, und die Infrarotdetektoreinrichtung mit einer Kaltabschirmeinrichtung, welche als Aperturblende wirkt, vorgesehen und angeordnet sind.

Insbesondere kann vorgesehen sein, dass die objektseitig erste, zweite, dritte, vierte, fünfte, sechste, siebte und achte Linse, die in der nachstehend angegebenen Tabelle 1 aufgeführten Eigenschaften aufweisen.

In Tabelle 1 sind die Oberflächen, welche die Infrarotstrahlung von der Objektseite herkommend beim Durchtritt durch die Weitwinkelobjektivvorrichtung durchläuft, durchnummeriert und die Oberflächen sind der jeweiligen Linse zugeordnet. Hierbei weist jede Linse zwei Oberflächen auf.

Ferner ist ein Krümmungsradius der jeweiligen Oberfläche angegeben, wobei ein negativer Krümmungsradius eine konkave Form der Oberfläche und ein positiver Krümmungsradius eine konvexe Form der Oberfläche indiziert. Darüber hinaus ist eine Dicke des zu der jeweiligen Oberfläche gehörenden Abschnitts der jeweiligen Linse angegeben. Darüber hinaus gibt die Tabelle 1 Auskunft über das Material, aus welchem die jeweilige Linse ausgebildet ist.

| Tabelle 1 | | | | |
|---|---|---|---|---|
| Linse # | Oberfläche # | Radius in mm | Dicke in mm | Material |
| 1 | 1 | 33.79869 | 3.00000 | Saphir |
| | 2 | 29.16613 | 1.940079 | |
| 2 | 3 | 21.99482 | 2.00000 | Silizium |
| | Asphärische Form: A =0.201931E-04, B= -0.461815E-08, C=-0.108923E-09, D =0.225581E-11 | | | |
| | 4 | 11.02236 | 7.941665 | |
| 3 | 5 | -1009.51624 | 1.500000 | Germanium |
| | 6 | 40.49534 | 0.300000 | |
| | Asphärische Form: A = 0.143879E-03, B = 0.126175E-05, C = -0.109009E-07, D = 0.916715E-09 | | | |
| 4 | 7 | 17.35924 | 2.000000 | Calciumfluorid |
| | 8 | 21.06749 | 3.259638 | |
| 5 | 9 | -61.48611 | 2.500000 | Zinksulfid |
| | 10 | -15.89141 | 4.401089 | |
| | Asphärische Form: A = 0.399752E-05, B = -0.722037E-07, C = -0.249654E-08, D = -0.636683E-11 | | | |
| 6 | 11 | -46.65468 | 2.000000 | Germanium |
| | 12 | 108.30690 | 0.200000 | |
| 7 | 13 | 39.57592 | 2.000000 | IG5 |
| | 14 | -81.93234 | 4.357528 | |
| 8 | 15 | 1033.86527 | 2.000000 | Silizium |
| | 16 | -30.36256 | 0.500000 | |
| | Asphärische Form: A = 0.203176E-04, B = 0.482712E-08, C = 0.219195E-09, D = -0.384778E-12 | | | |

Die in Tabelle 1 angegebenen Merkmale der Linsen der Weitwinkelobjektivvorrichtung ermöglichen eine optische passive Athermalisierung über einen weiten thermischen Bereich von mehr als 120 K, wobei geeignete optische Materialien ausgewählt und optische Lichtleistungswerte geeignet auf die einzelnen Oberflächen verteilt sind.

In einer vorteilhaften Weiterbildung der erfindungsgemäßen Weitwinkelobjektivvorrichtung kann vorgesehen sein, dass eine objektseitig fünfte Linse aus einem Material ausgebildet ist, welches eine chromatische Abbe-Zahl von 5 bis 60 aufweist, und/oder eine objektseitig sechste Linse aus einem Material ausgebildet ist, welches eine chromatische Abbe-Zahl von 125 bis 150 aufweist, und/oder eine objektseitig achte Linse aus einem Material ausgebildet ist, welches eine chromatische Abbe-Zahl von 250 bis 325 aufweist.

Die vorbeschriebene Kombination von chromatischen Abbe-Zahlen ermöglicht eine besonders effiziente und zuverlässige Ausbildung der erfindungsgemäßen Weitwinkelobjektivvorrichtung.

Hierbei ist ein thermischer Defokus derart gut kontrollierbar, dass eine gebeugte Energie innerhalb eines Quadrats mehr als 80 % abseits der optischen Achse umfasst, wobei dieser Wert bei einer vollen Breite von 30 µm evaluiert ist. Ferner beträgt eine thermische Änderung der Brennweite weniger als ±0,65 %.

In einer vorteilhaften Weiterbildung der erfindungsgemäßen Weitwinkelobjektivvorrichtung kann vorgesehen sein, dass ein hyperhemisphärisches diagonales Sichtfeld wenigstens 180° und höchstens 240° beträgt, und/oder dass eine laterale chromatische Aberration der Weitwinkelobjektivvorrichtung höchstens 0,06 % einer Bildhöhe beträgt, und/oder dass eine thermisch bedingte relative Schwankung der Brennweite von höchstens 0,92 % für alle Temperaturschwankungen weniger als 60 °C um einen Zielwert beträgt, und/oder dass eine relative F-Theta-Verzerrung weniger als ±1 % über ein gesamtes hyperhemisphärisches diagonales Sichtfeld beträgt, und/oder dass ein hyperhemisphärischer konkaver oder konvexer Krümmungsradius wenigstens 10 m beträgt, und/oder dass ein Verhältnis zwischen einer Länge und einer Brennweite der Weitwinkelobjektivvorrichtung weniger als 20 beträgt, und/oder dass ein Verhältnis zwischen einer bildseitigen Schnittweite zu einer Brennweite und/oder einer objektseitigen Schnittweite wenigstens 6 beträgt.

Die vorbeschriebenen Eigenschaften und Merkmale der Weitwinkelobjektivvorrichtung ermöglichen eine Ausbildung der Weitwinkelobjektivvorrichtung derart, dass eine transversale chromatische Aberration als Funktion der Bildhöhe über das gesamte MWIR-Band weniger als 0,2 % beträgt.

Ferner beträgt die longitudinale chromatische Aberration über das gesamte MWIR-Band weniger als die Fokustiefe (depth of focus / DOF).

In einer vorteilhaften Weiterbildung der erfindungsgemäßen Weitwinkelobjektivvorrichtung kann vorgesehen sein, dass in Richtung von einer Objektseite zu einer Bildseite die objektseitig erste Linse mit einer negativen Brechkraft, welche teilweise oder ganz aus Saphir, Spinell, und/oder Aluminiumoxynitrid ausgebildet ist, eine objektseitig zweite Linse mit einer negativen Brechkraft, welche teilweise oder ganz aus Germanium ausgebildet ist, eine objektseitig dritte Linse mit einer negativen Brechkraft, welche teilweise oder ganz aus Zinksulfid ausgebildet ist, eine objektseitig vierte Linse mit einer negativen Brechkraft, welche teilweise oder ganz aus Germanium ausgebildet ist, die objektseitig fünfte Linse mit einer positiven Brechkraft, welche teilweise oder ganz aus Saphir, Spinell, Aluminiumoxynitrid, Calciumfluorid, Lithiumfluorid, Bariumfluorid, Magnesiumfluorid und/oder Magnesiumoxid ausgebildet ist, die objektseitig sechste Linse mit einer positiven Brechkraft, welche teilweise oder ganz aus Zinksulfid und/oder MILTRAN-Keramik ausgebildet ist, eine objektseitig siebte Linse (57) mit einer negativen Brechkraft, welche teilweise oder ganz aus Germanium ausgebildet ist, die objektseitig achte Linse mit einer positiven Brechkraft, welche teilweise oder ganz aus Chalkogenidmaterial, insbesondere aus GASIR1, GASIR2, GASIR3, GASIR5, IG2, IG3, IG4, IG5, IG6 oder deren kommerziellen Äquivalenten ausgebildet ist, eine objektseitig neunte Linse mit einer positiven Brechkraft, welche teilweise oder ganz aus Germanium ausgebildet ist, die Infrarotdetektoreinrichtung mit einer Kaltabschirmeinrichtung, welche als Aperturblende wirkt, vorgesehen und angeordnet sind.

Tabelle 2 listet besonders vorteilhafte Merkmale bzw. Werte von Parametern der ersten, zweiten, dritten, vierten, fünften, sechsten, siebten, achten und neunten Linse der vorbeschriebenen Ausführungsform der Weitwinkelobjektivvorrichtung mit neun Linsen auf.

Eine asphärische Form der jeweiligen Oberfläche wird, sofern vorhanden, in den Tabellen 1 und 2 durch die Parameter A, B, C, D charakterisiert. Diese ergeben die Pfeilhöhenformel (1) der jeweiligen Oberfläche. Ist in den Tabellen 1 und 2 zu einer Oberfläche keine asphärische Form angegeben, so kann von einer sphärischen Ausführungsform der jeweiligen Oberfläche ausgegangen werden.

Eine asphärische Fläche wird mit der Pfeilhöhenformel beschreiben: $z \left(h\right) = \frac{{ρ}^{2} {h}^{2}}{1 + \sqrt{1 - \left(1+K\right) {ρ}^{2} {h}^{2}}} + {Ah}^{2} + {Bh}^{6} + {Ch}^{8} + {Dh}^{10}$ (1),
mit der Pfeilhöhe z,
der Exzentrizität K,
der Scheitelkrümmung ρ,
der Höhe h, und
den Koeffizienten für Terme höherer Ordnung A, B, C, D.

Die vorbeschriebenen Ausführungsformen der Weitwinkelobjektivvorrichtung ermöglichen die Ausbildung eines optischen Systems mit einer axialen chromatischen Aberration innerhalb der beugungslimitierten Fokustiefe.

Das optische System der Weitwinkelobjektivvorrichtung hat vorzugsweise eine thermische Brennpunktsvariation, welche kleiner als die Fokustiefe innerhalb eines Temperaturbereichs über einen Wert von ±60 °C ist. Die Schwankung von ±60 °C kann insbesondere um einen mittleren Wert von 20 °C vorliegen, sofern Aluminiumhalteeinrichtungen verwendet werden.

Es kann vorgesehen sein, dass das optische System der Weitwinkelobjektivvorrichtung eine laterale chromatische Aberration von -0,088 % der Bildhöhe bei einem Spektralbereich von 3,5 µm bis 5 µm aufweist.

Ferner hat das optische System der Weitwinkelobjektivvorrichtung eine thermische Variation der Brennweite von -0,55 %, wenn Linsenhalterungen aus Aluminium verwendet werden.

Insbesondere kann vorgesehen sein, dass die objektseitig erste, zweite, dritte, vierte, fünfte, sechste, siebte, achte und neunte Linse die in Tabelle 2 aufgeführten Eigenschaften aufweisen.

| Tabelle 2 | | | | |
|---|---|---|---|---|
| Linse # | Oberfläche # | Radius in mm | Dicke in mm | Material |
| 1 | 1 | 21.65013 | 4.00000 | Saphir |
| | 2 | 15.43857 | 2.000000 | |
| 2 | 3 | 14.77710 | 2.400000 | Germanium |
| | 4 | 8.46525 | 10.583235 | |
| 3 | 5 | 22.17702 | 1.500000 | Zinksulfid |
| | 6 | 11.68577 | 1.417323 | |
| | Asphärische Form: A = -0.258134E-03, B = 0.324855E-04, C = -0. 241200E-05, D = 0.608818E-07 | | | |
| 4 | 7 | -26.36438 | 1.500000 | Germanium |
| | 8 | 429.20158 | 0.300000 | |
| | Asphärische Form: A = 0.405218E-03, B = -0.265065E-05, C = 0.115055E-05, D = -0.303443E-07 | | | |
| 5 | 9 | 23.69941 | 2.000000 | Saphir |
| | 10 | 35.90592 | 0.700985 | |
| 6 | 11 | 23.16646 | 4.113845 | Zinksulfid |
| | 12 | -11.50875 | 0.200000 | |
| | Asphärische Form: A =-0.922999E-04, B = 0.733233E-05, C = -0. 830677E-07, D =0.894504E-09 | | | |
| 7 | 13 | -14.23388 | 1.500000 | Germanium |
| | 14 | -445.33482 | 0.206426 | |
| | Asphärische Form: A = 0.618726E-04, B = -0.342966E-05, C = 0.181976E-07, D = 0.322247E-10 | | | |
| 8 | 15 | 39.57652 | 3.600000 | IG2 |
| | 16 | -24.16859 | 1.678186 | |
| 9 | 17 | -47.65271 | 2.500000 | Germanium |
| | 18 | -20.77304 | 0.100000 | |
| | Asphärische Form: A = 0.324252E-04, B = 0.259227E-06, C = 0.420735E-08, D = 0.642187E-11 | | | |

An dieser Stelle wird eine Zielvorrichtung, insbesondere für eine Waffe, offenbart, welche die vorbeschriebene erfindungsgemäße Weitwinkelobjektivvorrichtung, insbesondere als Teil einer Zieloptik, umfasst.

An dieser Stelle sei ferner eine Waffe mit einer Zielvorrichtung offenbart, welche die erfindungsgemäße Weitwinkelobjektivvorrichtung, insbesondere als Teil einer Zieloptik der Zielvorrichtung, umfasst.

Bei der offenbarten Zielvorrichtung und/oder der offenbarten Waffe können selbstverständlich auch die als vorteilhaft beschriebenen Weiterbildungen der erfindungsgemäßen Weitwinkelobjektivvorrichtung zum Einsatz kommen.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Nachfolgend werden Ausführungsbeispiele der Erfindung anhand der Zeichnung näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen:
- Figur 1: eine schematische Darstellung einer möglichen Ausführungsform der erfindungsgemäßen Weitwinkelobjektivvorrichtung;
- Figur 2: eine schematische Darstellung einer Schar von möglichen Modulationstransferfunktionen (MTF) der Weitwinkelobjektivvorrichtung nach Figur 1;
- Figur 3: eine schematische Darstellung einer möglichen F-Theta-Verzerrung der Weitwinkelobjektivvorrichtung nach Figur 1;
- Figur 4: eine schematische Darstellung eines möglichen mittleren quadratischen Lichtfleckdurchmessers der Weitwinkelobjektivvorrichtung nach Figur 1;
- Figur 5: eine schematische Darstellung eines weiteren möglichen Verlaufs des mittleren quadratischen Lichtfleckdurchmessers der Weitwinkelobjektivvorrichtung nach Figur 1;
- Figur 6: eine schematische Darstellung eines weiteren möglichen Verlaufs des mittleren quadratischen Lichtfleckdurchmessers der erfindungsgemäßen Weitwinkelobjektivvorrichtung nach Figur 1;
- Figur 7: eine schematische Darstellung einer weiteren möglichen Ausführungsform der erfindungsgemäßen Weitwinkelobjektivvorrichtung;
- Figur 8: eine schematische Darstellung einer Schar von möglichen Modulationstransferfunktionen (MTF) der Weitwinkelobjektivvorrichtung nach Figur 7;
- Figur 9: eine schematische Darstellung einer möglichen F-Theta-Verzerrung der Weitwinkelobjektivvorrichtung nach Figur 7;
- Figur 10: eine schematische Darstellung eines möglichen mittleren quadratischen Lichtfleckdurchmessers der Weitwinkelobjektivvorrichtung nach Figur 7;
- Figur 11: eine schematische Darstellung eines weiteren möglichen Verlaufs des mittleren quadratischen Lichtfleckdurchmessers der Weitwinkelobjektivvorrichtung nach Figur 7; und
- Figur 12: eine schematische Darstellung eines weiteren möglichen Verlaufs des mittleren quadratischen Lichtfleckdurchmessers der erfindungsgemäßen Weitwinkelobjektivvorrichtung nach Figur 7.

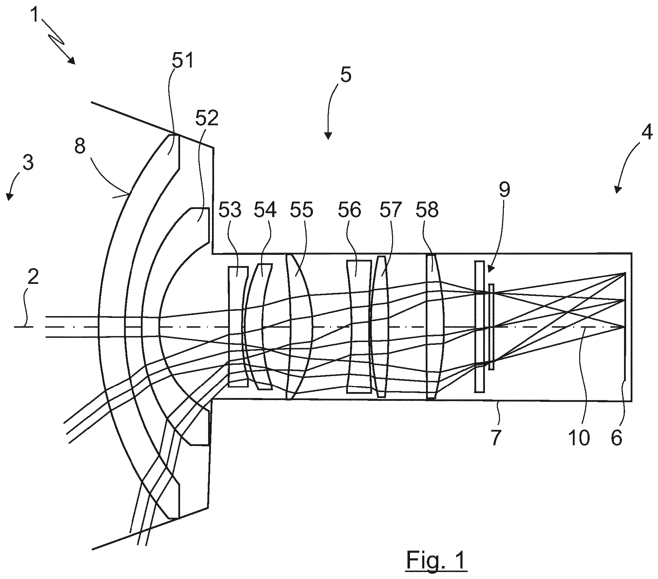

Figur 1 zeigt eine schematische Darstellung einer möglichen Ausführungsform einer erfindungsgemäßen Weitwinkelobjektivvorrichtung 1.

Die Weitwinkelobjektivvorrichtung 1, für einen infraroten Spektralbereich, weist entlang einer optischen Achse 2 koaxial in Richtung von einer Objektseite 3 zu einer Bildseite 4 nacheinander angeordnet eine Mehrzahl an Linsen 5 sowie eine Infrarotdetektoreinrichtung 6 auf. Ferner ist die Weitwinkelobjektivvorrichtung 1 in dem infraroten Spektralbereich, insbesondere von 3,5 µm bis 5 µm, achromatisch und/oder korrigiert für eine chromatische Aberration. Darüber hinaus ist die Weitwinkelobjektivvorrichtung 1 in einem Temperaturbereich von -40 °C bis +80 °C passiv athermalisiert ausgebildet. Die Linsen 5 und die Infrarotdetektoreinrichtung 6 sind hierbei in einer optomechanischen Halteeinrichtung 7 und/oder in einer Rahmeneinrichtung gehalten, welche Aluminium aufweist und/oder aus Aluminium ausgebildet ist.

Bei der in Figur 1 dargestellten Weitwinkelobjektivvorrichtung 1 sind vorzugsweise acht Linsen 5 vorhanden.

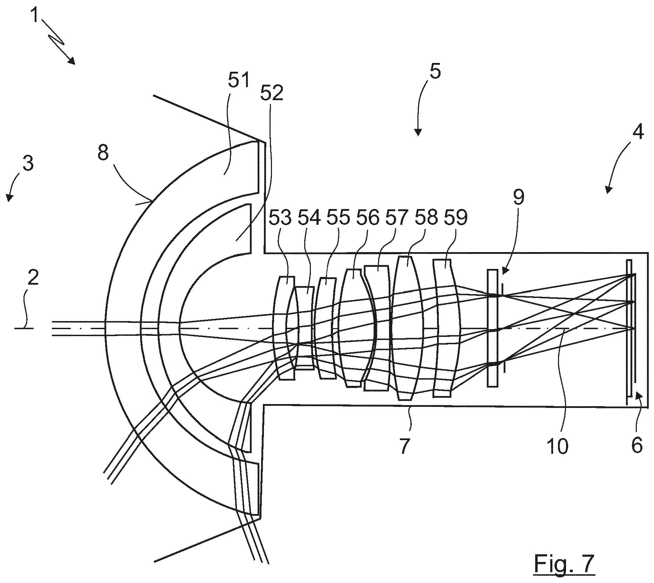

Alternativ oder zusätzlich können auch neun Linsen 5 (siehe Figur 7) oder mehr Linsen 5 vorhanden sein (nicht dargestellt).

In den in den Figuren 1 und 7 dargestellten Ausführungsbeispielen der Weitwinkelobjektivvorrichtung 1 ist vorzugsweise eine objektseitig erste Linse 51 aus einem Material ausgebildet, welches mechanisch widerstandsfähig gegen Umwelteinflüsse ist. Beispielhaft ist aus Gründen der Übersichtlichkeit in den Figuren 1 und 7 stellvertretend für alle Linsen 5 nur eine Oberfläche der Linse 51 mit dem Bezugszeichen 8 versehen. Ferner weist das Aluminium der optomechanischen Halteeinrichtung 7 einen Ausdehnungskoeffizienten von α = 23.6 µm/(m °C) auf. Das Aluminium ist ferner vorzugsweise Teil einer Legierung 6061.

Gemäß den Ausführungsbeispielen der Weitwinkelobjektivvorrichtung 1 in den Figuren 1 und 7 weisen die Linsen 5 wenigstens drei asphärische Flächen bzw. Oberflächen 8 auf. D. h. unter denjenigen Oberflächen der Linsen 5, welche die von der Objektseite 3 kommende Infrarotstrahlung passiert, befinden sich wenigstens drei asphärische ausgebildete Oberflächen 8.

Ferner beträgt eine F-Zahl der Weitwinkelobjektivvorrichtung 1 vorzugsweise 1,8 bis 2,2.

In dem in Figur 1 dargestellten Ausführungsbeispiel der Weitwinkelobjektivvorrichtung, welche acht Linsen 5 aufweist, ist eine objektseitig vierte Linse 54 vorzugweise aus einem Material ausgebildet, welches eine chromatische Abbe-Zahl von 5 bis 60 aufweist. Ferner ist vorzugsweise eine objektseitig fünfte Linse 55 aus einem Material ausgebildet, welches eine chromatische Abbe-Zahl von 125 bis 150 aufweist. Weiterhin ist eine objektseitig siebte Linse 57 aus einem Material ausgebildet, welches eine chromatische Abbe-Zahl von 250 bis 325 aufweist.

Die Weitwinkelobjektivvorrichtung 1 gemäß dem in Figur 1 dargestellten Ausführungsbeispiel hat ein diagonales Sichtfeld von 140° bis 180° und/oder eine longitudinale chromatische Aberration, welche kleiner ist als eine beugungsbegrenzte Abbildungstiefe, und/oder einen thermischen Streukreis des quadratischen Mittels, welcher für alle Temperaturschwankungen um weniger als 60 °C um einen Zielwert kleiner ist als ein Durchmesser eines beugungsbegrenzten Lichtflecks, und/oder eine laterale chromatische Aberration von höchstens 0,11 % einer Bildhöhe, und/oder eine thermisch bedingte relative Schwankung der Brennweite von höchstens 0,65 % für alle Temperaturschwankungen um weniger als 60 °C um einen Zielwert, und/oder eine relative F-Theta-Verzerrung von weniger als ±1 % über ein gesamtes diagonales Sichtfeld, und/oder ein Verhältnis zwischen einer bildseitigen Schnittweite zu einer Brennweite und/oder einer objektseitigen Schnittweite von wenigstens 4,4.

In ihrer spezifischen Ausführungsform sind bei der in Figur 1 dargestellten Weitwinkelobjektivvorrichtung 1 in Richtung von der Objektseite 3 zu der Bildseite 4 acht Linsen 5 hintereinander angeordnet. Hierbei ist die objektseitig erste Linse 51 mit einer negativen Brechkraft versehen und teilweise oder ganz aus Saphir, Spinell und/oder Aluminiumoxynitrid ausgebildet. Eine objektseitig zweite Linse 52 ist mit einer negativen Brechkraft versehen und teilweise oder ganz aus Silizium ausgebildet. Die objektseitig dritte Linse 53 ist mit einer negativen Brechkraft versehen und teilweise oder ganz aus Germanium ausgebildet. Die objektseitig vierte Linse 54 ist mit einer positiven Brechkraft versehen und teilweise oder ganz aus Saphir, Spinell, Aluminiumoxynitrid, Calciumfluorid, Lithiumfluorid, Bariumfluorid, Magnesiumfluorid und/oder Magnesiumoxid ausgebildet. Die objektseitig fünfte Linse 55 ist mit einer positiven Brechkraft versehen und teilweise oder ganz aus Zinksulfid und/oder MILTRAN-Keramik ausgebildet. Eine objektseitig sechste Linse 56 weist eine negative Brechkraft auf und ist ferner teilweise oder ganz aus Germanium ausgebildet. Die objektseitig siebte Linse 57 weist eine positive Brechkraft auf und ist teilweise oder ganz aus Chalkogenidmaterial, insbesondere aus GASIR1, GASIR2, GASIR3, GASIR5, IG2, IG3, IG4, IG5, IG6 oder deren kommerziellen Äquivalenten ausgebildet. Eine objektseitig achte Linse weist eine positive Brechkraft auf und ist teilweise oder ganz aus Silizium ausgebildet. Ferner ist auf der Bildseite 4 die Infrarotdetektoreinrichtung 6 mit einer Kaltabschirmeinrichtung 9, welche als Aperturblende wirkt, angeordnet.

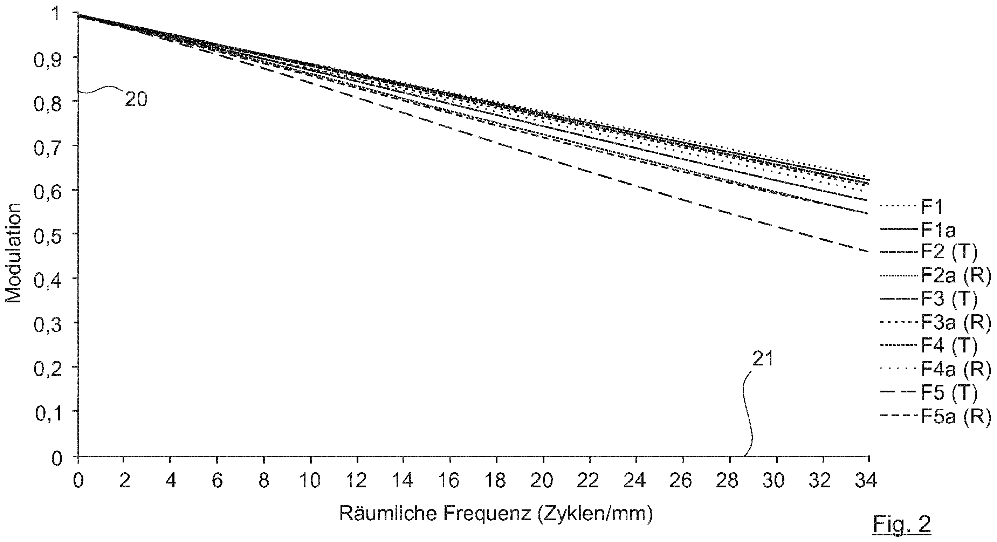

Figur 2 zeigt eine schematische Darstellung einer Schar von möglichen Verläufen der Modulationstransferfunktion der Weitwinkelobjektivvorrichtung 1 nach Figur 1.

Auf einer vertikalen y-Achse 20 ist in dem in Figur 2 dargestellten Diagramm eine Modulation der Modulationstransferfunktionseinheiten frei aufgetragen. Auf einer horizontalen x-Achse ist eine räumliche Frequenz in Zyklen pro Millimeter aufgetragen.

Die in Figur 2 dargestellten möglichen Verläufe F1 - F5 und F1a - F5a ergeben sich aus den MTF-Kurven in tangentialer Richtung (T) und radialer Richtung (R), die wie folgt variiert wurden: F1 (für die Beugungsgrenze), F1a (für 0,000°), F2 (für T = 19,130°), F2a (für R = 19,130°), F3 (für T = 38,250°), F3a (für R = 38,250°), F4 (für T = 57,380°), F4a (für R = 57,380°), F5 (für T = 76,500°) und F5a (für R = 76,500°).

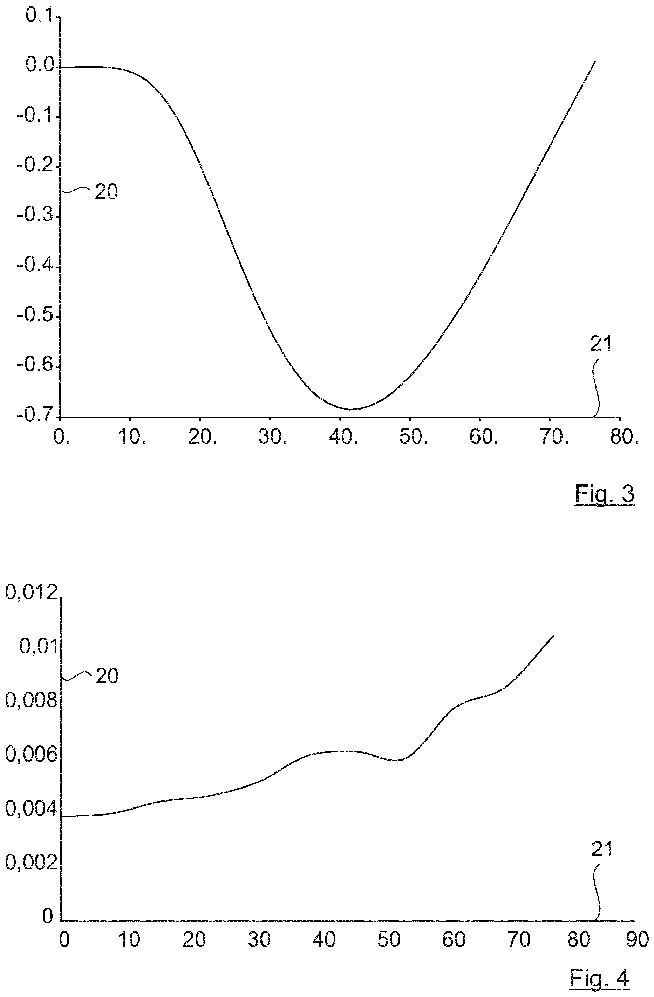

Figur 3 zeigt eine schematische Darstellung eines möglichen Verlaufs einer F-Theta-Verzerrung der Weitwinkelobjektivvorrichtung 1 nach Figur 1.

Auf der vertikalen y-Achse 20 ist hierbei eine Verzerrung in Prozent aufgetragen. Auf der horizontalen x-Achse 21 ist in Figur 3 ein Feldwinkel θ in Grad aufgetragen. Der Verlauf der F-Theta-Verzerrung zeigt in Figur 3 ein betragsmäßiges Maximum bei ca. 42°.

Figur 4 zeigt eine schematische Darstellung eines möglichen Verlaufs eines mittleren quadratischen Lichtfleckdurchmessers der Weitwinkelobjektivvorrichtung 1 nach Figur 1, welcher sich bei einer Temperatur der Weitwinkelobjektivvorrichtung 1 von +20 °C ergibt.

Auf der vertikalen y-Achse 20 ist in Figur 4 ein mittlerer quadratischer Lichtfleckdurchmesser (RMS Spot Diameter) in Millimetern aufgetragen. Auf der horizontalen x-Achse ist in Figur 4 ein Feldwinkel im Objektraum bzw. auf der Objektseite 3 in Grad aufgetragen.

In Figur 4 zeigt der mittlere quadratische Lichtfleckdurchmesser eine steigende Tendenz mit zunehmender Größe des Feldwinkels.

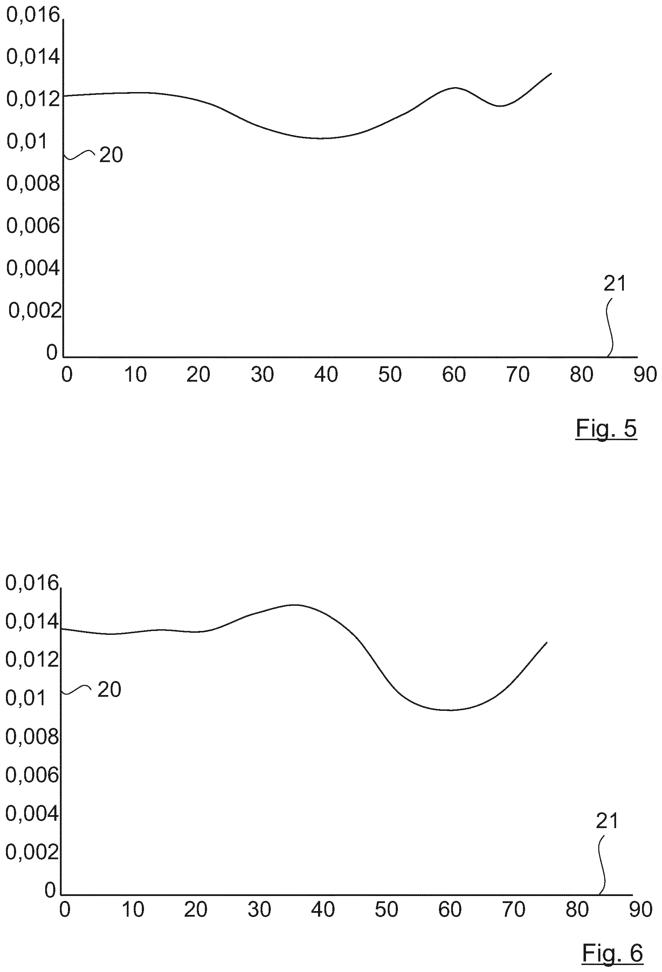

Figur 5 zeigt eine schematische Darstellung eines weiteren möglichen Verlaufs des mittleren quadratischen Lichtfleckdurchmessers der Weitwinkelobjektivvorrichtung 1 nach Figur 1.

Wie in Figur 4 ist auch in Figur 5 auf der vertikalen y-Achse 20 der mittlere quadratische Lichtfleckdurchmesser in Millimetern und auf der horizontalen x-Achse 21 der Feldwinkel im Objektraum in Grad dargestellt. Der in Figur 5 gezeigte Verlauf des Lichtfleckdurchmessers in Abhängigkeit von dem Feldwinkel ergibt sich bei einer Temperatur der Weitwinkelobjektivvorrichtung 1 von +80 °C. Im Unterschied zu dem in Figur 4 dargestellten Beispiel von +20 °C ergibt sich bei einer Temperatur von +80 °C eine geringere Abhängigkeit des Lichtfleckdurchmessers von dem Feldwinkel.

Figur 6 zeigt eine schematische Darstellung eines weiteren möglichen Verlaufs des mittleren quadratischen Lichtfleckdurchmessers der Weitwinkelobjektivvorrichtung 1 in Abhängigkeit von dem Feldwinkel im Objektraum.

Wiederum ist in Figur 6 - wie bei den Figuren 4 und 5 - auf der vertikalen y-Achse 20 der mittlere quadratische Lichtfleckdurchmesser in Millimetern und auf der horizontalen x-Achse 21 der Feldwinkel im Objektraum in Grad aufgetragen.

Der in Figur 6 dargestellte Verlauf ergibt sich bei einer Temperatur der Weitwinkelobjektivvorrichtung 1 von -40 °C.

Auch bei dem in Figur 6 dargestellten Verlauf ergibt sich eine geringere Abhängigkeit des mittleren quadratischen Lichtfleckdurchmessers von dem Wert des Feldwinkels im Vergleich zu dem in Figur 4 dargestellten Verlauf bei +20 °C.

Figur 7 zeigt eine schematische Darstellung einer weiteren möglichen Ausführungsform der Weitwinkelobjektivvorrichtung 1. Bei der in Figur 7 dargestellten Ausführungsform der Weitwinkelobjektivvorrichtung sind neun Linsen 5 vorhanden.

Bei dem in Figur 7 dargestellten Ausführungsbeispiel der Weitwinkelobjektivvorrichtung 1 ist die objektseitig fünfte Linse 55 vorzugsweise aus einem Material ausgebildet, welches eine chromatische Abbe-Zahl von 5 bis 60 aufweist.

Die objektseitig sechste Linse 56 ist vorzugsweise aus einem Material ausgebildet, welches eine chromatische Abbe-Zahl von 125 bis 150 aufweist.

Die objektseitig achte Linse 58 ist vorzugsweise aus einem Material ausgebildet, welches eine chromatische Abbe-Zahl von 250 bis 325 aufweist.

Ferner beträgt bei der in Figur 7 dargestellten Ausführungsform der Weitwinkelobjektivvorrichtung 1 ein hyperhemisphärisches diagonales Sichtfeld wenigstens 180° und höchstens 240°. Ferner ist die in Figur 7 dargestellte Ausführungsform der Weitwinkelobjektivvorrichtung derart eingerichtet, dass vorzugsweise eine laterale chromatische Aberration der Weitwinkelobjektivvorrichtung 1 höchstens 0,06 % einer Bildhöhe beträgt, und/oder dass eine thermisch bedingte relative Schwankung der Brennweite höchstens 0,92 % für alle Temperaturschwankungen weniger als 60 °C um einen Zielwert beträgt, und/oder dass eine relative F-Theta-Verzerrung weniger als ±1 % über ein gesamtes hyperhemisphärisches diagonales Sichtfeld beträgt, und/oder dass ein hyperhemisphärischer konkaver oder konvexer Krümmungsradius wenigstens 10 m beträgt, und/oder dass ein Verhältnis zwischen einer Länge und einer Brennweite 10 der Weitwinkelobjektivvorrichtung 1 weniger als 20 beträgt, und/oder dass ein Verhältnis zwischen einer bildseitigen Schnittweite zu einer Brennweite und/oder einer objektseitigen Schnittweite wenigstens 6 beträgt.

Bei dem in Figur 7 dargestellten Ausführungsbeispiel der Weitwinkelobjektivvorrichtung 1 sind die neun Linsen 5 in Richtung von der Objektseite 3 zu der Bildseite 4 angeordnet.

Die objektseitig erste Linse 51 weist eine negative Brechkraft auf und ist teilweise oder ganz aus Saphir, Spinell oder Aluminiumoxynitrid ausgebildet.

Die objektseitig zweite Linse 52 weist eine negative Brechkraft auf und ist teilweise oder ganz aus Germanium ausgebildet.

Die objektseitig dritte Linse 53 weist eine negative Brechkraft auf und ist teilweise oder ganz aus Zinksulfid ausgebildet.

Die objektseitig vierte Linse 54 weist eine negative Brechkraft auf und ist teilweise oder ganz aus Germanium ausgebildet.

Die objektseitig fünfte Linse 55 weist eine positive Brechkraft auf und ist teilweise oder ganz aus Saphir, Spinell, Aluminiumoxynitrid, Calciumfluorid, Lithiumfluorid, Bariumfluorid, Magnesiumfluorid und/oder Magnesiumoxid ausgebildet.

Die objektseitig sechste Linse 56 weist eine positive Brechkraft auf und ist teilweise oder ganz aus Zinksulfid und/oder MILTRAN-Keramik ausgebildet.

Die objektseitig siebte Linse 57 weist eine negative Brechkraft auf und ist teilweise oder ganz aus Germanium ausgebildet.

Die objektseitig achte Linse 58 weist eine positive Brechkraft auf und ist teilweise oder ganz aus Chalkogenidmaterial, insbesondere aus GASIR1, GASIR2, GASIR3, GASIR5, IG2, IG3, IG4, IG5, IG6 oder deren kommerziellen Äquivalenten ausgebildet.

Die objektseitig neunte Linse 59 weist eine positive Brechkraft auf und ist teilweise oder ganz aus Germanium ausgebildet.

Die Infrarotdetektoreinrichtung 6 ist auf der Bildseite 4 angeordnet und umfasst die Kaltabschirmeinrichtung 9, welche als Aperturblende wirkt.

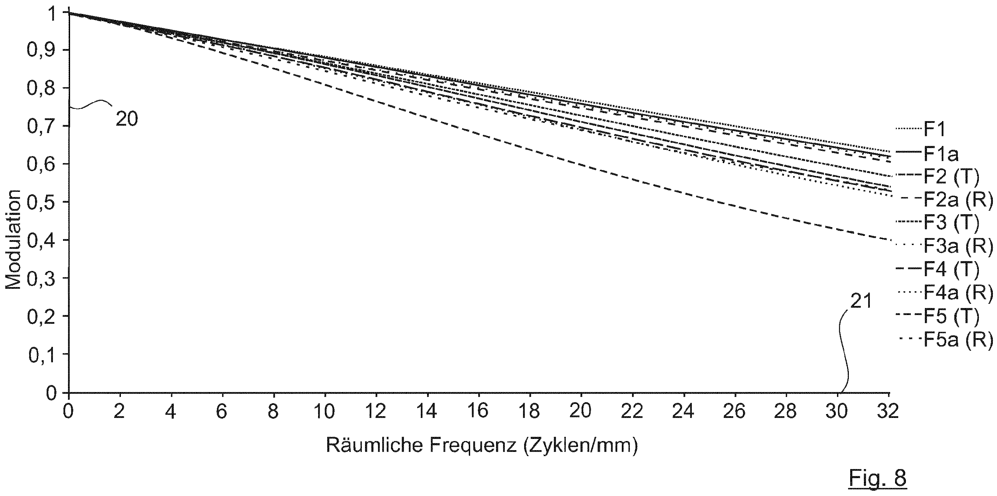

Figur 8 zeigt eine schematische Darstellung einer Schar von möglichen Verläufen der Modulationstransferfunktion (MTF) der Weitwinkelobjektivvorrichtung 1 nach Figur 7.

Auf einer vertikalen y-Achse 20 ist in dem in Figur 2 dargestellten Diagramm eine Modulation der Modulationstransferfunktionseinheiten frei aufgetragen. Auf einer horizontalen x-Achse ist eine räumliche Frequenz in Zyklen pro Millimeter aufgetragen.

Die in Figur 8 dargestellten möglichen Verläufe F1 - F5 und F1a - F5a ergeben sich aus den MTF-Kurven in tangentialer Richtung (T) und radialer Richtung (R), die wie folgt variiert wurden: F1 (für die Beugungsgrenze), F1a (für 0,000°), F2 (für T = 27,500°), F2a (für R = 27,500°), F3 (für T = 55,000°), F3a (für R = 55,000°), F4 (für T = 82,500°), F4a (für R = 82,500°), F5 (für T = 110,000°) und F5a (für R = 110,000°).

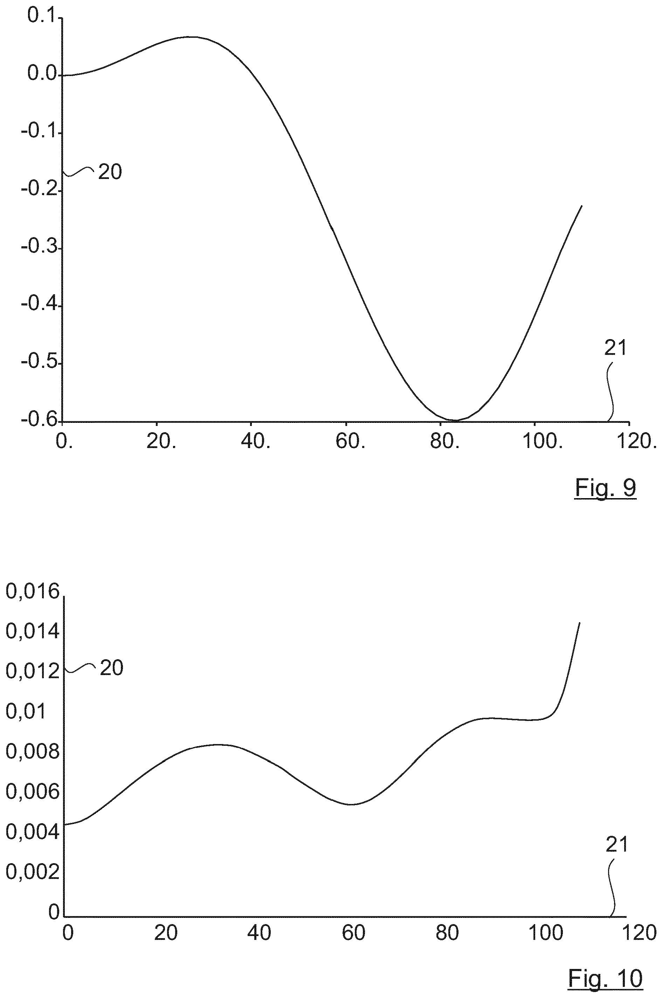

Figur 9 zeigt eine schematische Darstellung eines möglichen Verlaufs einer F-Theta-Verzerrung der Weitwinkelobjektivvorrichtung 1 nach Figur 7.

Auf der vertikalen y-Achse 20 ist hierbei eine Verzerrung in Prozent aufgetragen. Auf der horizontalen x-Achse 21 ist in Figur 9 ein Feldwinkel θ in Grad aufgetragen. Der Verlauf der F-Theta-Verzerrung zeigt in Figur 9 ein betragsmäßiges Maximum bei ca. 82°.

Figur 10 zeigt eine schematische Darstellung eines möglichen Verlaufs eines mittleren quadratischen Lichtfleckdurchmessers der Weitwinkelobjektivvorrichtung 1 nach Figur 7.

Auf der vertikalen y-Achse 20 ist in Figur 10 ein mittlerer quadratischer Lichtfleckdurchmesser (RMS Spot Diameter) in Millimetern aufgetragen. Auf der horizontalen x-Achse ist in Figur 10 ein Feldwinkel im Objektraum bzw. auf der Objektseite 3 in Grad aufgetragen.

In Figur 10 zeigt der mittlere quadratische Lichtfleckdurchmesser eine steigende Tendenz mit zunehmender Größe des Feldwinkels. Der Verlauf des mittleren quadratischen Lichtfleckdurchmessers, welcher in Figur 10 dargestellt ist, ergibt sich bei einer Temperatur der Weitwinkelobjektivvorrichtung 1 von 20 °C.

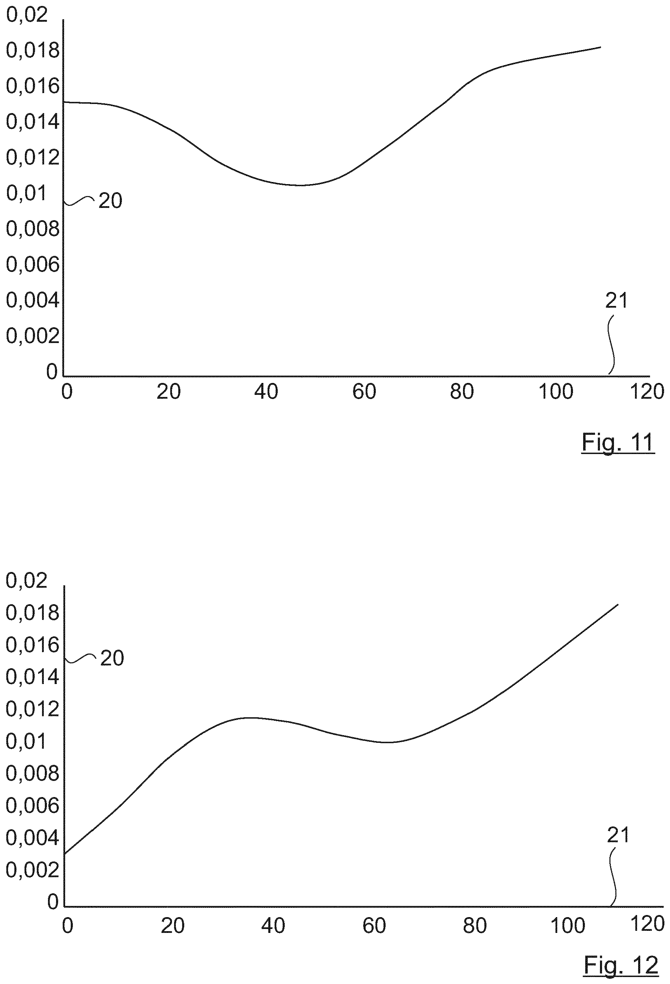

Figur 11 zeigt eine schematische Darstellung eines weiteren möglichen Verlaufs des mittleren quadratischen Lichtfleckdurchmessers der Weitwinkelobjektivvorrichtung 1 nach Figur 7.

Wie in Figur 10 ist auch in Figur 11 auf der vertikalen y-Achse 20 der mittlere quadratische Lichtfleckdurchmesser in Millimetern und auf der horizontalen x-Achse 21 der Feldwinkel im Objektraum in Grad dargestellt. Der in Figur 11 dargestellte Verlauf des Lichtfleckdurchmessers in Abhängigkeit von dem Feldwinkel ergibt sich bei einer Temperatur der Weitwinkelobjektivvorrichtung 1 von +80 °C. Im Unterschied zu dem in Figur 10 dargestellten Beispiel von +20 °C ergibt sich bei einer Temperatur von +80 °C eine geringere Abhängigkeit des Lichtfleckdurchmessers von dem Feldwinkel.

Figur 12 zeigt eine schematische Darstellung eines weiteren möglichen Verlaufs des mittleren quadratischen Lichtfleckdurchmesser der Weitwinkelobjektivvorrichtung 1 in Abhängigkeit von dem Feldwinkel im Objektraum.

Wiederum ist in Figur 12 - wie bei den Figuren 10 und 11 - auf der vertikalen y-Achse 20 der mittlere quadratische Lichtfleckdurchmesser in Millimetern und auf der horizontalen x-Achse 21 der Feldwinkel im Objektraum in Grad aufgetragen.

Der in Figur 12 dargestellte Verlauf ergibt sich bei einer Temperatur der Weitwinkelobjektivvorrichtung 1 von -40 °C.

Auch bei dem in Figur 12 dargestellten Verlauf ergibt sich eine geringere Abhängigkeit des mittleren quadratischen Lichtfleckdurchmessers von dem Wert des Feldwinkels im Vergleich zu dem in Figur 4 dargestellten Verlauf bei +20 °C.

Im Vergleich zu der in Figur 1 dargestellten Ausführungsform mit acht Linsen weist die in Figur 7 dargestellte Ausführungsform mit neun Linsen tendenziell eine stärkere Abhängigkeit des mittleren Lichtfleckdurchmessers von dem Wert des Feldwinkels im Objektraum auf.

### Bezugszeichenliste:

- 1: Weitwinkelobjektivvorrichtung
- 2: optische Achse
- 3: Objektseite
- 4: Bildseite
- 5: Linsen
- 6: Infrarotdetektoreinrichtung
- 7: Halteeinrichtung
- 8: Oberfläche
- 9: Kaltabschirmeinrichtung
- 10: Brennweite

- 20: y-Achse
- 21: x-Achse

- 51: erste Linse
- 52: zweite Linse
- 53: dritte Linse
- 54: vierte Linse
- 55: fünfte Linse
- 57: siebte Linse
- 58: achte Linse
- 59: neunte Linse

- F1-F5: Verläufe

- F1a-F5a: Verläufe

## Patentansprüche

1. Weitwinkelobjektivvorrichtung (1) für einen infraroten Spektralbereich, welche
- entlang einer optischen Achse (2) koaxial in Richtung von einer Objektseite (3) zu einer Bildseite (4) nacheinander angeordnet eine Mehrzahl an Linsen (5) sowie eine Infrarotdetektoreinrichtung (6) aufweist, und
- in dem infraroten Spektralbereich, insbesondere von 3,5 µm bis 5 µm, achromatisch ist und/oder korrigiert für eine chromatische Aberration ist, und
- in einem Temperaturbereich von -40 °C bis 80 °C passiv athermalisiert ausgebildet ist, wobei
- die Linsen (5) und die Infrarotdetektoreinrichtung in einer optomechanischen Halteeinrichtung (7) und/oder in einer Rahmeneinrichtung gehalten sind, welche Aluminium aufweist und/oder aus Aluminium ausgebildet ist, **dadurch gekennzeichnet, dass**
- acht oder neun Linsen (5) vorgesehen sind.

2. Weitwinkelobjektivvorrichtung (1) nach Anspruch 1,
**dadurch gekennzeichnet, dass**
- eine objektseitig erste Linse (51) aus einem Material ausgebildet ist, welches mechanisch widerstandsfähig gegen Umwelteinflüsse ist, und/oder
- das Aluminium einen Ausdehnungskoeffizienten von α = 23.6 µm/(m °C) aufweist, und/oder
- das Aluminium Teil einer Legierung 6061 ist, und/oder
- die Linsen (5) wenigstens drei asphärische Flächen aufweisen, und/oder
- eine F-Zahl der Weitwinkelobjektivvorrichtung (1) von 1,8 bis 2,2 beträgt.

3. Weitwinkelobjektivvorrichtung (1) nach Anspruch 1 oder 2,
**dadurch gekennzeichnet, dass**
- eine objektseitig vierte Linse (54) aus einem Material ausgebildet ist, welches eine chromatische Abbe-Zahl von 5 bis 60 aufweist, und/oder
- eine objektseitig fünfte Linse (55) aus einem Material ausgebildet ist, welches eine chromatische Abbe-Zahl von 125 bis 150 aufweist, und/oder
- eine objektseitig siebte Linse (57) aus einem Material ausgebildet ist, welches eine chromatische Abbe-Zahl von 250 bis 325 aufweist.

4. Weitwinkelobjektivvorrichtung (1) nach Anspruch 1, 2 oder 3,
**gekennzeichnet durch**
- ein diagonales Sichtfeld von 140° bis 180°, und/oder
- eine longitudinale chromatische Aberration, welche kleiner ist als eine beugungsbegrenzte Abbildungstiefe, und/oder
- einen thermischen Streukreis des quadratischen Mittels, welcher für alle Temperaturschwankungen um weniger als 60 °C um einen Zielwert kleiner ist als ein Durchmesser eines beugungsbegrenzten Lichtflecks, und/oder
- eine laterale chromatische Aberration von höchstens 0,11 % einer Bildhöhe, und/oder
- eine thermisch bedingte relative Schwankung der Brennweite von höchstens 0,65 % für alle Temperaturschwankungen um weniger als 60°C um einen Zielwert, und/oder
- eine relative F-Theta-Verzerrung von weniger als ±1 % über ein gesamtes diagonales Sichtfeld, und/oder
- ein Verhältnis zwischen einer bildseitigen Schnittweite zu einer Brennweite und/oder einer objektseitigen Schnittweite von wenigstens 4,4.

5. Weitwinkelobjektivvorrichtung (1) nach einem der Ansprüche 1 bis 4,
**dadurch gekennzeichnet, dass**
in Richtung von der Objektseite (3) zu der Bildseite (4)
- die objektseitig erste Linse (51) mit einer negativen Brechkraft, welche teilweise oder ganz aus Saphir, Spinell, und/oder Aluminiumoxynitrid ausgebildet ist,
- eine objektseitig zweite Linse (52) mit einer negativen Brechkraft, welche teilweise oder ganz aus Silizium ausgebildet ist,
- eine objektseitig dritte Linse (53) mit einer negativen Brechkraft, welche teilweise oder ganz aus Germanium ausgebildet ist,
- die objektseitig vierte Linse (54) mit einer positiven Brechkraft, welche teilweise oder ganz aus Saphir, Spinell, Aluminiumoxynitrid, Calciumfluorid, Lithiumfluorid, Bariumfluorid, Magnesiumfluorid und/oder Magnesiumoxid ausgebildet ist,
- die objektseitig fünfte Linse (55) mit einer positiven Brechkraft, welche teilweise oder ganz aus Zinksulfid und/oder MILTRAN-Keramik ausgebildet ist,
- eine objektseitig sechste Linse (56) mit einer negativen Brechkraft, welche teilweise oder ganz aus Germanium ausgebildet ist,
- die objektseitig siebte Linse (57) mit einer positiven Brechkraft, welche teilweise oder ganz aus Chalkogenidmaterial, insbesondere aus GASIR1, GASIR2, GASIR3, GASIR5, IG2, IG3, IG4, IG5, IG6 oder deren kommerziellen Äquivalenten ausgebildet ist,
- eine objektseitig achte Linse (58) mit einer positiven Brechkraft, welche teilweise oder ganz aus Silizium ausgebildet ist, und
- die Infrarotdetektoreinrichtung (6) mit einer Kaltabschirmeinrichtung (9), welche als Aperturblende wirkt,
vorgesehen und angeordnet sind.

6. Weitwinkelobjektivvorrichtung (1) nach Anspruch 1oder 2,
**dadurch gekennzeichnet, dass**
- eine objektseitig fünfte Linse (55) aus einem Material ausgebildet ist, welches eine chromatische Abbe-Zahl von 5 bis 60 aufweist, und/oder
- eine objektseitig sechste Linse (56) aus einem Material ausgebildet ist, welches eine chromatische Abbe-Zahl von 125 bis 150 aufweist, und/oder
- eine objektseitig achte Linse (58) aus einem Material ausgebildet ist, welches eine chromatische Abbe-Zahl von 250 bis 325 aufweist.

7. Weitwinkelobjektivvorrichtung (1) nach Anspruch 1 oder 6, **dadurch gekennzeichnet, dass**
- ein hyperhemisphärisches diagonales Sichtfeld wenigstens 180° und höchstens 240° beträgt, und/oder
- eine laterale chromatische Aberration der Weitwinkelobjektivvorrichtung (1) höchstens 0,06 % einer Bildhöhe beträgt, und/oder
- eine thermisch bedingte relative Schwankung der Brennweite von höchstens 0,92 % für alle Temperaturschwankungen weniger als 60 °C um einen Zielwert beträgt, und/oder
- eine relative F-Theta-Verzerrung weniger als ±1 % über ein gesamtes hyperhemisphärisches diagonales Sichtfeld beträgt, und/oder
- ein hyperhemisphärischer konkaver oder konvexer Krümmungsradius wenigstens 10 m beträgt, und/oder
- ein Verhältnis zwischen einer Länge und einer Brennweite (10) der Weitwinkelobjektivvorrichtung (1) weniger als 20 beträgt, und/oder
- ein Verhältnis zwischen einer bildseitigen Schnittweite zu einer Brennweite und/oder einer objektseitigen Schnittweite wenigstens 6 beträgt.

8. Weitwinkelobjektivvorrichtung (1) nach Anspruch 1, 6 oder 7, **dadurch gekennzeichnet, dass**
in Richtung von einer Objektseite (3) zu einer Bildseite (4)
- die objektseitig erste Linse (51) mit einer negativen Brechkraft, welche teilweise oder ganz aus Saphir, Spinell, und/oder Aluminiumoxynitrid ausgebildet ist,
- eine objektseitig zweite Linse (52) mit einer negativen Brechkraft, welche teilweise oder ganz aus Germanium ausgebildet ist,
- eine objektseitig dritte Linse (53) mit einer negativen Brechkraft, welche teilweise oder ganz aus Zinksulfid ausgebildet ist,
- eine objektseitig vierte Linse (54) mit einer negativen Brechkraft, welche teilweise oder ganz aus Germanium ausgebildet ist,
- die objektseitig fünfte Linse (55) mit einer positiven Brechkraft, welche teilweise oder ganz aus Saphir, Spinell, Aluminiumoxynitrid, Calciumfluorid, Lithiumfluorid, Bariumfluorid, Magnesiumfluorid und/oder Magnesiumoxid ausgebildet ist,
- die objektseitig sechste Linse (56) mit einer positiven Brechkraft, welche teilweise oder ganz aus Zinksulfid und/oder MILTRAN-Keramik ausgebildet ist,
- eine objektseitig siebte Linse (57) mit einer negativen Brechkraft, welche teilweise oder ganz aus Germanium ausgebildet ist,
- die objektseitig achte Linse (58) mit einer positiven Brechkraft, welche teilweise oder ganz aus Chalkogenidmaterial, insbesondere aus GASIR1, GASIR2, GASIR3, GASIR5, IG2, IG3, IG4, IG5, IG6 oder deren kommerziellen Äquivalenten ausgebildet ist,
- eine objektseitig neunte Linse (59) mit einer positiven Brechkraft, welche teilweise oder ganz aus Germanium ausgebildet ist,
- die Infrarotdetektoreinrichtung (6) mit einer Kaltabschirmeinrichtung (9), welche als Aperturblende wirkt,
vorgesehen und angeordnet sind.

## Claims

1. A wide-angle objective lens apparatus (1) for the infrared spectral range, which
- comprises a plurality of lenses (5) arranged coaxially along an optical axis (2) in the direction from an object side (3) to an image side (4), as well as an infrared detector device (6), and
- is achromatic and/or corrected for chromatic aberration in the infrared spectral range, in particular from 3.5 µm to 5 µm, and
- is designed to be passively athermalized within a temperature range of -40 °C to 80 °C, wherein
- the lenses (5) and the infrared detector assembly are held in an optomechanical mounting assembly (7) and/or in a frame assembly, which comprises aluminum and/or is formed from aluminum, **characterized in that**
- eight or nine lenses (5) are provided.

2. The wide-angle objective lens apparatus according to claim 1,
**characterized in that**
- a first lens (51) on the object side is formed from a material that is mechanically resistant to environmental influences, and/or
- the aluminum has a coefficient of thermal expansion of α = 23.6 µm/(m °C), and/or
- the aluminum is part of a 6061 alloy, and/or
- the lenses (5) have at least three aspheric surfaces, and/or
- the F-number of the wide-angle lens assembly (1) ranges from 1.8 to 2.2.

3. The wide-angle objective lens apparatus (1) according to claim 1 or 2,
**characterized in that**
- a fourth lens (54) on the object side is formed from a material having a chromatic Abbe number of 5 to 60, and/or
- a fifth lens (55) on the object side is formed from a material having a chromatic Abbe number of 125 to 150, and/or
- a seventh lens (57) on the object side is formed from a material having a chromatic Abbe number of 250 to 325.

4. The wide-angle objective lens apparatus (1) according to claim 1, 2, or 3, **characterized by**
- a diagonal field of view of 140° to 180°, and/or
- a longitudinal chromatic aberration that is smaller than a diffraction-limited depth of field, and/or
- a root-mean-square thermal divergence circle that, for all temperature fluctuations of less than 60 °C around a target value, is smaller than the diameter of a diffraction-limited light spot, and/or
- a lateral chromatic aberration of no more than 0.11% of an image height, and/or
- a thermally induced relative variation in focal length of no more than 0.65% for all temperature fluctuations of less than 60°C around a target value, and/or
- a relative F-theta distortion of less than ±1% across the entire diagonal field of view, and/or
- a ratio of the image-side focal length to the focal length and/or the object-side focal length of at least 4.4.

5. The wide-angle objective lens apparatus (1) according to any one of claims 1 through 4,
**characterized in that**
in the direction from the object side (3) to the image side (4)
- the first lens (51) on the object side, having a negative refractive power and consisting partly or entirely of sapphire, spinel, and/or aluminum oxynitride,
- a second lens (52) on the object side, having a negative refractive power and consisting partly or entirely of silicon,
- a third lens (53) on the object side with a negative refractive power, which is made partially or entirely of germanium,
- the fourth lens (54) on the object side with a positive refractive power, which is made partially or entirely of sapphire, spinel, aluminum oxynitride, calcium fluoride, lithium fluoride, barium fluoride, magnesium fluoride, and/or magnesium oxide,
- a fifth lens (55) on the object side with a positive refractive power, which is made partially or entirely of zinc sulfide and/or MILTRAN ceramic,
- a sixth lens (56) on the object side with a negative refractive power, which is made partially or entirely of germanium,
- the seventh lens (57) on the object side, having a positive refractive power, which is formed partially or entirely from a chalcogenide material, in particular from GASIR1, GASIR2, GASIR3, GASIR5, IG2, IG3, IG4, IG5, IG6, or their commercial equivalents,
- an eighth lens (58) on the object side having a positive refractive power, which is formed partially or entirely of silicon, and
- the infrared detector device (6) with a cold shielding device (9) that acts as an aperture diaphragm,
are provided and arranged.

6. The wide-angle objective lens apparatus (1) according to claim 1 or 2,
**characterized in that**
- a fifth lens (55) on the object side is formed from a material having a chromatic Abbe number of 5 to 60, and/or
- a sixth lens (56) on the object side is formed from a material having a chromatic Abbe number of 125 to 150, and/or
- an eighth lens (58) on the object side is formed from a material having a chromatic Abbe number of 250 to 325.

7. The wide-angle objective lens apparatus (1) according to claim 1 or 6,
**characterized in that**
- a hyperhemispherical diagonal field of view is at least 180° and at most 240°, and/or
- the lateral chromatic aberration of the wide-angle lens assembly (1) is at most 0.06% of an image height, and/or
- a thermally induced relative variation in focal length is at most 0.92% for all temperature variations of less than 60 °C relative to a target value, and/or
- a relative F-theta distortion is less than ±1% across an entire hyperhemispherical diagonal field of view, and/or
- a hyperhemispherical concave or convex radius of curvature is at least 10 m, and/or
- a ratio between a length and a focal length (10) of the wide-angle lens assembly (1) is less than 20, and/or
- a ratio between an image-side focal length and a focal length and/or an object-side focal length is at least 6.

8. The wide-angle objective lens apparatus (1) according to claim 1, 6, or 7,
**characterized in that**
in the direction from an object side (3) to an image side (4)
- the first lens (51) on the object side, having a negative refractive power and formed partially or entirely of sapphire, spinel, and/or aluminum oxynitride,
- a second lens (52) on the object side with a negative refractive power, which is made partially or entirely of germanium,
- a third lens (53) on the object side with a negative refractive power, which is made partially or entirely of zinc sulfide,
- a fourth lens (54) on the object side with a negative refractive power, which is made partially or entirely of germanium,
- the fifth lens (55) on the object side with a positive refractive power, which is made partially or entirely of sapphire, spinel, aluminum oxynitride, calcium fluoride, lithium fluoride, barium fluoride, magnesium fluoride, and/or magnesium oxide,
- a sixth lens (56) on the object side with a positive refractive power, which is made partially or entirely of zinc sulfide and/or MILTRAN ceramic,
- a seventh lens (57) on the object side with a negative refractive power, which is made partially or entirely of germanium,
- the eighth lens (58) on the object side, having a positive refractive power, which is formed partially or entirely from a chalcogenide material, in particular from GASIR1, GASIR2, GASIR3, GASIR5, IG2, IG3, IG4, IG5, IG6, or their commercial equivalents,
- a ninth lens (59) on the object side with a positive refractive power, which is made partially or entirely of germanium,
- the infrared detector device (6) with a cold shielding device (9) that functions as an aperture diaphragm,
are provided and arranged.

## Revendications

1. Appareil de lentille d'objectif grand angle (1) pour le domaine spectral infrarouge, qui
- comporte, disposés coaxialement le long d'un axe optique (2) dans la direction allant d'un côté objet (3) vers un côté image (4), une pluralité de lentilles (5) ainsi qu'un dispositif de détection infrarouge (6), et
- est achromatique et/ou corrigée en aberration chromatique dans le domaine spectral infrarouge, en particulier de 3,5 µm à 5 µm, et
- est conçue avec une athermalisation passive dans une plage de températures allant de -40 °C à 80 °C, dans lequel
- les lentilles (5) et le dispositif de détection infrarouge sont maintenus dans un dispositif de fixation optomécanique (7) et/ou dans un dispositif de châssis qui comporte de l'aluminium et/ou est réalisé en aluminium, **caractérisé en ce que**
- huit ou neuf lentilles (5) sont prévues.

2. L'appareil de lentille d'objectif grand angle (1) selon la revendication 1,
**caractérisé en ce que**
- une première lentille (51) située du côté de l'objet est réalisée dans un matériau mécaniquement résistant aux influences environnementales, et/ou
- l'aluminium présente un coefficient de dilatation de α = 23,6 µm/(m °C), et/ou
- l'aluminium fait partie d'un alliage 6061, et/ou
- les lentilles (5) présentent au moins trois surfaces asphériques, et/ou
- l'ouverture focale du dispositif d'objectif grand angle (1) est comprise entre 1,8 et 2,2.

3. L'appareil de lentille d'objectif grand angle (1) selon la revendication 1 ou 2, **caractérisé en ce que**
- une quatrième lentille (54) du côté de l'objet est réalisée dans un matériau présentant un indice d'Abbe chromatique compris entre 5 et 60, et/ou
- une cinquième lentille (55), située du côté de l'objet, est réalisée dans un matériau présentant un indice d'Abbe chromatique compris entre 125 et 150, et/ou
- une septième lentille (57), située du côté de l'objet, est réalisée dans un matériau présentant un indice d'Abbe chromatique compris entre 250 et 325.

4. L'appareil de lentille d'objectif grand angle (1) selon la revendication 1, 2 ou 3, **caractérisé par**
- un champ de vision diagonal compris entre 140° et 180°, et/ou
- une aberration chromatique longitudinale inférieure à une profondeur de champ limitée par la diffraction, et/ou
- un cercle de diffusion thermique de moyenne quadratique qui, pour toutes les variations de température inférieures à 60 °C autour d'une valeur cible, est inférieur au diamètre d'un spot lumineux limité par diffraction, et/ou
- une aberration chromatique latérale ne dépassant pas 0,11 % d'une hauteur d'image, et/ou
- une variation relative de la distance focale due à la température ne dépassant pas 0,65 % pour toutes les variations de température inférieures à 60 °C par rapport à une valeur cible, et/ou
- une distorsion F-thêta relative inférieure à ±1 % sur l'ensemble du champ de vision diagonal, et/ou
- un rapport entre une distance focale de coupe côté image et une distance focale de coupe côté objet d'au moins 4,4.

5. L'appareil de lentille d'objectif grand angle (1) selon l'une quelconque des revendications 1 à 4,
**caractérisé en ce que**
dans la direction allant du côté objet (3) vers le côté image (4)
- la première lentille côté objet (51) présentant une puissance de réfraction négative, qui est constituée en partie ou entièrement de saphir, de spinelle et/ou d'oxynitrure d'aluminium,
- une deuxième lentille côté objet (52) présentant une puissance de réfraction négative, qui est constituée en partie ou entièrement de silicium,
- une troisième lentille (53) côté objet, de puissance négative, constituée en partie ou entièrement de germanium,
- la quatrième lentille (54) côté objet, de puissance positive, constituée en partie ou entièrement de saphir, de spinelle, d'oxynitrure d'aluminium, de fluorure de calcium, de fluorure de lithium, de fluorure de baryum, de fluorure de magnésium et/ou d'oxyde de magnésium,
- une cinquième lentille (55) côté objet, présentant une puissance de réfraction positive, constituée en partie ou entièrement de sulfure de zinc et/ou de céramique MILTRAN,
- une sixième lentille (56) côté objet, présentant une puissance de réfraction négative, constituée en partie ou entièrement de germanium,
- la septième lentille (57) côté objet, présentant une puissance de réfraction positive, qui est constituée en partie ou en totalité d'un matériau chalcogénure, en particulier de GASIR1, GASIR2, GASIR3, GASIR5, IG2, IG3, IG4, IG5, IG6 ou de leurs équivalents commerciaux,
- une huitième lentille (58) côté objet, présentant une puissance de réfraction positive, qui est constituée en partie ou entièrement de silicium, et
- le dispositif de détection infrarouge (6) comprenant un dispositif de blindage à froid (9) qui agit comme un diaphragme d'ouverture,
sont prévus et agencés.

6. L'appareil de lentille d'objectif grand angle (1) selon la revendication 1 ou 2, **caractérisé en ce que**
- une cinquième lentille (55) côté objet est réalisée dans un matériau présentant un indice d'Abbe chromatique compris entre 5 et 60, et/ou
- une sixième lentille (56), située du côté de l'objet, est réalisée dans un matériau présentant un indice d'Abbe chromatique compris entre 125 et 150, et/ou
- une huitième lentille (58), située du côté de l'objet, est réalisée dans un matériau présentant un indice d'Abbe chromatique compris entre 250 et 325.

7. L'appareil de lentille d'objectif grand angle (1) selon la revendication 1 ou 6, **caractérisé en ce que**
- un champ de vision diagonal hyperhémisphérique est compris entre au moins 180° et au plus 240°, et/ou
- l'aberration chromatique latérale du dispositif d'objectif grand angle (1) est au plus égale à 0,06 % d'une hauteur d'image, et/ou
- une variation relative de la distance focale due à la température est au plus égale à 0,92 % pour toutes les variations de température inférieures à 60 °C par rapport à une valeur cible, et/ou
- une distorsion relative F-thêta est inférieure à ±1 % sur l'ensemble d'un champ de vision diagonal hyperhémisphérique, et/ou
- un rayon de courbure hyperhémisphérique concave ou convexe est d'au moins 10 m, et/ou
- le rapport entre une longueur et une distance focale (10) du dispositif d'objectif grand angle (1) est inférieur à 20, et/ou
- le rapport entre une distance focale de coupure côté image et une distance focale et/ou une distance focale de coupure côté objet est d'au moins 6.

8. L'appareil de lentille d'objectif grand angle (1) selon la revendication 1, 6 ou 7, **caractérisé en ce que**
dans la direction allant d'un côté objet (3) vers un côté image (4)
- la première lentille côté objet (51) présente une puissance de réfraction négative et est constituée en partie ou entièrement de saphir, de spinelle et/ou d'oxynitrure d'aluminium,
- une deuxième lentille (52) côté objet, présentant une puissance de réfraction négative, qui est constituée en partie ou entièrement de germanium,
- une troisième lentille (53) côté objet, présentant une puissance de réfraction négative, qui est constituée en partie ou entièrement de sulfure de zinc,
- une quatrième lentille (54) côté objet, présentant une puissance de réfraction négative, constituée en partie ou entièrement de germanium,
- la cinquième lentille (55) côté objet, présentant une puissance de réfraction positive, constituée en partie ou entièrement de saphir, de spinelle, d'oxynitrure d'aluminium, de fluorure de calcium, de fluorure de lithium, de fluorure de baryum, de fluorure de magnésium et/ou d'oxyde de magnésium,
- la sixième lentille (56) côté objet, présentant une puissance de réfraction positive, qui est constituée en partie ou en totalité de sulfure de zinc et/ou de céramique MILTRAN,
- une septième lentille (57) côté objet, présentant une puissance de réfraction négative, qui est constituée en partie ou en totalité de germanium,
- la huitième lentille (58) côté objet, présentant une puissance de réfraction positive, qui est constituée en partie ou en totalité d'un matériau chalcogénure, en particulier de GASIR1, GASIR2, GASIR3, GASIR5, IG2, IG3, IG4, IG5, IG6 ou de leurs équivalents commerciaux,
- une neuvième lentille (59) côté objet, présentant une puissance de réfraction positive, qui est constituée en partie ou entièrement de germanium,
- le dispositif de détection infrarouge (6) comprenant un dispositif de blindage à froid (9) qui agit comme un diaphragme d'ouverture,
sont prévus et agencés.
